(19) Europäisches Patentamt
European Patent Office
Office européen des brevets

(11) Publication number: **0 208 545 B1**

(12) **EUROPEAN PATENT SPECIFICATION**

(45) Date of publication of patent specification: **16.09.92**

(51) Int. Cl.5: **G01L 23/08**, G01L 23/16

(21) Application number: **86305290.8**

(22) Date of filing: **09.07.86**

(54) **Method and apparatus for detecting combustion pressure in engine.**

(30) Priority: **10.07.85 JP 150240/85**

(43) Date of publication of application:
**14.01.87 Bulletin 87/03**

(45) Publication of the grant of the patent:
**16.09.92 Bulletin 92/38**

(84) Designated Contracting States:
**DE FR GB**

(56) References cited:
**GB-A- 2 149 535**
**US-A- 4 158 310**

(73) Proprietor: **HITACHI, LTD.**
**6, Kanda Surugadai 4-chome**
**Chiyoda-ku, Tokyo 100(JP)**

(72) Inventor: **Suzuki, Seikoo**
**3705, Kanaicho**
**Hitachiota-shi(JP)**
Inventor: **Miki, Masayuki**
**2643-1, Katsukura**
**Katsuta-shi(JP)**
Inventor: **Amano, Matsuo**
**21-5, Hanayamacho-2-chome**
**Hitachi-shi(JP)**
Inventor: **Sasayama, Takao**
**14-11, Kanesawacho-7-chome**
**Hitachi-shi(JP)**

(74) Representative: **Baillie, Iain Cameron et al**
**c/o Ladas & Parry, Altheimer Eck 2**
**W-8000 München 2(DE)**

EP 0 208 545 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### FIELD OF THE INVENTION

The present invention relates to a method and an apparatus for detecting combustion pressure in an internal combustion engine. More particularly, the present invention concerns a combustion pressure detecting method and apparatus for the engine for the purpose of correcting the detected combustion pressure as detected.

### DESCRIPTION OF THE PRIOR ART

There are various known pressure sensors for detecting combustion pressure in an engine such as those of piezo-electric type, semiconductor type, capacitive type and others. However, every one of these known sensors encounters difficulty in detecting the pressure of combustion with a reasonably high accuracy over an extended period (use life) under adverse environmental conditions such as high voltage, high temperature and high pressure. None of these sensors thus is adapted for installation to motor vehicles. In addition to the aforementioned sensors, there may be mentioned a pressure sensor in which optical fibers are used. By way of example, Japanese Unexamined Patent Publication No. 59-60334 discloses a typical one of the hitherto known pressure sensor in which optical fibers are used.

The known pressure sensor employing optical fiber is generally intended for use in process controls. When this sensor is employed as a combustion pressure detecting device in an engine, there arises a problem that temperature of the pressure detecting device itself varies over a very wide range under the influence of combustion temperature in the engine so the device has the disadvantage that it is impossible to accurately measure the combustion pressure.

It is known from GB-A-2149535 to provide a method for adjusting the fuel/air ratio supplied to an internal combustion engine by measuring the pressure with a piezoelectric pressure transducer at a predetermined angle of rotation of the engine and to compare the measured pressure with a corresponding standard to thereby effect adjustment of the fuel/air ratio to cause the measure value to approach the standard. However such a piezoelectric pressure transducer has electrical signal noise disadvantages when operating in an internal combustion engine environment and so an optical fiber pressure sensor is preferred.

### SUMMARY OF THE INVENTION

An object of the invention is to provide a combustion pressure detecting apparatus which is capable of detecting the combustion pressure accurately even under the adverse influence of environmental factors such as, inter alia, a wide variation of the ambient temperature.

The present invention resides in the provision of correcting means for the combustion pressure detecting apparatus.

According to a first aspect of this invention there is provided a method of detecting combustion pressure in an internal combustion engine for generating an electrical signal in response to said pressure, including the steps of producing an electrical signal based on said combustion pressure at a predetermined angle of rotation of said engine by using an optical sensing means including a light emitting means and a light detecting means, obtaining a correcting value between the detected value and a predetermined reference value to derive a difference signal therebetween, and using said difference signal to execute correcting operations to bring said difference toward zero by controlling the output of at least one of said light detecting means and said light emitting means.

According to a second aspect of this invention there is provided a combustion chamber pressure detecting apparatus for generating an electrical signal in response to a combustion pressure in an internal combustion engine including means for detecting a predetermined angle of rotation of said engine, means for producing a detected electrical signal based on said combustion pressure at said detected predetermined angle, means for producing a predetermined reference value, comparison means for comparing the detected electrical signal with said predetermined reference value to derive a difference therebetween, and correcting means for executing correcting operations to bring said difference toward zero characterised in that the detecting means is a light sensing means including a light emiting means and a light detecting means whereby said light sensing means outputs said electrical signal to said comparison means and upon detection of said predetermined angle the comparison means compares the detected electrical signal with said reference value and a correcting signal is produced to control the output of at least one of said light detecting means and said light emitting means.

In the correcting method deviation of the output of the pressure sensor from a predetermined value at a predetermined angle of rotation of a shaft of the engine may be detected, wherein a correcting value for zeroing the deviation is utilised for varying the operating conditions of the sensor. The correcting value thus generated may be utilised for correcting the sensor output and/or of the detecting means to obtain the corrected value of measurement. By way of example, the correcting value may be utilised for varying the bias of the sensor. Preferably an optical fiber type sensor is used and the correcting value may be utilised for controlling the intensity of light output of light emitting means and/or of the light detecting means. The sensor intended for use in a motor vehicle should preferably exhibit an enhanced insusceptibility to noise and in this connection, an optical fiber type sensor exhibits an excellent noise insusceptibility. Accordingly, in the following description of the preferred embodiments of the invention, it is assumed that an optical fiber type sensor is employed as a typical example.

## BRIEF DESCRIPTION OF THE DRAWINGS

The invention will now be described by way of example in which:-

Fig. 1 is a block diagram showing an embodiment of the present invention with one form of learning/correcting circuit;

Fig. 2 is a view showing schematically a structure of a detecting portion of a combustion pressure sensor in which optical fibers are employed;

Fig. 3 is a view showing the form in which the optical fibers are secured within a pipe of glass;

Fig. 4 is a view showing relationship between the quantity of reflected light and a gap;

Fig. 5 is a view illustrating relationships between the combustion pressure and light reception sensitivity;

Fig. 6 is a view illustrating a waveform of the combustion pressure and a correcting procedure;

Fig. 7 is a view for illustrating output characteristics of the combustion pressure sensor;

Fig. 8 is a view showing in detail a signal processing circuit;

Fig. 9 is a block diagram showing another embodiment of the learning/correcting circuit;

Fig. 10 is a flow chart for illustrating arithmetic determination of a correcting factor; and

Fig. 11 is a flow chart for illustrating arithmetic determination of the true pressure from the measured value.

## DESCRIPTION OF THE PREFERRED EMBODIMENTS

Fig. 1 shows a combustion pressure detecting apparatus according to an embodiment of the present invention, and Fig. 2 shows a detail of the detecting portion thereof. The detecting portion (sensor) is composed of a pipe 1 made of borosilicated glass, optical fibers 2 fixedly secured within the pipe 1 by means of a refractory adhesive and a silicon diaphragm 3 having a recess in the vicinity of the end of the fibers 2 to define a gap therebetween, the diaphragm being anodically bonded to an end face of the glass pipe 1.

The form of the optical fibers 2 secured within the glass pipe 1 is shown in Fig. 3. In the Figure 3, a fiber bundle containing light projecting optical fibers 21 and light receiving optical fibers 22 is fixedly secured within the bore of the glass pipe 1 by a refractory adhesive 4 of inorganic material such as pulverized glass. After fixation of the fibers, the end faces of the glass pipe 1, the light projecting optical fibers 22 and the light receiving optical fibers 22 are ground and polished to a mirror quality so that the end faces lie in a single plane. By polishing the end face of the glass pipe 1 to the grade of a mirror surface quality, it is possible to bond the silicon diaphragm 3 with a high bonding strength through the anodic bonding process (i.e. an electrochemical bonding at high voltage and high temperature). Since all the glass pipe 1, the light projecting fibers 21, and the light receiver fibers 22 and the refractory adhesive 4 are made of inorganic materials such as vitreous compositions, these structural components resist thermal distortion even when the ambient temperature changes. Accordingly, any tendency for cracks to be produced in the bonded portions of these structural components is suppressed to a minimum. Further, the end faces of the glass pipe 1, the light projecting optical fibers and the light receiving optical fibers can be maintained at positions lying substantially on one and the same plane regardless of variations in the ambient temperature. The detecting portion or sensor is employed for measuring the combustion pressure by determining the quantity of light reflected at the deformable silicon diaphragm and received by the light receiving optical fibers 22, the light being initially projected from the light projecting optical fibers 21.

In the following, a method of measuring the combustion pressure by making use of the amount of refleted light will be described. A relationship between the quantity of reflected light and a gap is illustrated in Fig. 4. When the radius of the optical fiber is represented by r while the gap between the silicon diaphragm and the end face of the optical fiber is represented by $\ell$, the quantity of reflected light is such as illustrated in Fig. 4. As will be seen, the quantity of reflected light is at maximum when $\ell/r = 0.35$. Experiments conducted by the inventors have shown that the combustion pressure can be detected linearly at regions a and b illustrated in Fig. 4. From the viewpoint of miniaturization of the detecting portion or sensor, the region a is preferred where the quantity of reflected light changes more steeply.

Next, an apparatus for detecting the combustion pressure in the engine according to an embodiment of the invention will be described by referring to Fig. 1. A measuring channel is constituted by a detecting portion 5, an optical fiber bundle 6 and a learning/correcting unit 7. The latter, in turn, is composed of a light emitting element 8 such as LED, a light detecting element 9 such as silicon pin photodiode and a signal processing circuit 10 for controlling the quantity of light emitted by the light emitting element 8 in response to a signal produced by a bottom dead point sensor 11. Further, the signal processing circuit 10 produces an output voltage signal $E_O$ proportional to the combustion pressure P, which signal is transmitted to an engine controlling microcomputer 12.

As described above, the silicon diaphragm of the detecting portion 5 is fixedly bonded to the glass pipe which has a thermal coefficient of expansion substantially equal to that of the diaphragm. Consequently, even when the temperature of the detecting portion 5 varies over a wide range under the influence of combustion temperature in the engine, any change in the gap $\ell$ set between the end face of the optical fiber bundle and the silicon diaphragm when the combustion pressure P is substantially equal to the atmospheric pressure when the engine is at bottom dead center remains very insignificant. In other words, this invention provides a combustion pressure detecting apparatus in which a reference value output signal is produced in a combustion chamber when the pressure therein is substantially equal to the atmospheric pressure and said output is not affected by temperature, whereby the measurement of the combustion pressure P can be determined with high accuracy. Further, since the detecting portion 5 is constituted by elements made of similar vitreous materials having substantially equal thermal coefficients of expansion, the detecting portion 5 will not be harmed by the adverse environmental conditions of high temperature and high pressure brought about by combustion, thus ensuring high reliability of measurement of the combustion pressure over an extended period. The detecting portion 5 is mounted on an ignition plug and thus used in the vicinity of the point to which an ignition voltage of several thousand volts is applied. However, since the detecting portion 5 operates by detecting the quantity of reflected light, the detecting portion 5 is unlikely to be subjected to the influence of high voltage. It should be mentioned that the gap $\ell$ at atmospheric pressure is so selected as to fall within a range of several microns to several tens of Microns.

In the following, the learning/correcting system will be described. Relationships between the combustion pressure P and the light reception sensitivity as illustrated in Fig. 5 with the pressure P being taken in terms of the absolute pressure on the assumption that the gap $\ell$ between the silicon diaphragm and the end face of the optical fiber bundle is set with the region a shown in Fig. 3. The gap $\ell$ is decreased linearly as a function of increasing combustion pressure P. Consequently the light reception sensitivity of the light receiving element 9 is decreased as the combustion pressure P increases, as shown in Fig. 5. The relation between the light reception sensitivity and the combustion pressure is modified, as indicated by characteristic curves X, Y and Z, due to the light intensity emitted by the light emitting element 8, the light transfer constants of optical couplers (or optical connectors, not shown) disposed, respectively, between the optical fiber bundle 6 and each of the light emitting element 8 and the light receiving element 9, the light transfer constant of the optical fiber bundle, and the reflection factor of the diaphragm surface varying because of external factors such as temperature variation, contamination, vibration and others.

It will be seen that all the light reception sensitivities represented by the characteristic curves X, Y and Z change linearly. Fortunately, it has been experimentally established that the characteristics X, Y and Z can be made to coincide perfectly with one another over the whole measuring range of the combustion pressure P by setting the light reception sensitivities (values indicated by circles in Fig. 5) on the characteristic curves at a predetermined pressure value $P_K$ equal to one another by predeterminedly varying the light intensity of the light emitting element 8 through the signal processing circuit 10. In particular, the pressure $P_K$ corresponds to the combustion pressure at a predetermined engine state, e.g. the state in which the piston within the engine cylinder is positioned at the bottom dead point, as described hereinafter.

The possibility that coincidence between the characteristics X, Y and Z may be provided is due to the fact that the zero point drift of the light reception sensitivity with respect to the combustion pressure P, substantially does not take place but only the change in span occurs. This is because the relation between the combustion pressure P and the gap $\ell$ does not substantially vary even under the external disturbance such as temperature change, as described hereinbefore. More specifically since the detecting portion 5 is constituted by components having approximately the same thermal expansion coefficients and additionally by the anodic bonding between pipe 1 and diaphragm 3 requiring no adhesive, the change in the gap $\ell$ can remain very small in spite of external disturbance such as temperature change.

A waveform representative of change in the combustion pressure is illustrated in Fig. 6. In dependence on the state of combustion in the engine, a so-called knocking phenomenon may take place, resulting in an output waveform of high frequency. In Fig. 6, circles represent the engine state in which the piston assumes the bottom dead point. The peak value PT of the combustion pressure appears periodically and varies in dependence on such factors as air-fuel ratio, ignition timing and others. However, the combustion pressure $P_K$ at the bottom dead point is subtantially independent of the state of combustion and assumes a substantially constant value (which is substantially equal to the atmospheric pressure although in the strict sense it differs from the latter). By taking advantage of this property, the learning/correction of the combustion pressure sensor can be realized.

A process of the learning/correction will be described in conjunction with the system shown in Fig. 1. On the basis of an output signal of the engine bottom dead point sensor 11 which is adapted to detect the bottom dead point (instead of providing this sensor, the bottom dead point may alternatively be estimated from the output of a crank angle sensor), the light intensity emitted by the light emitting element 8 is controlled by the signal processing circuit 10 (e.g. by controlling the voltage supplied to the light emitting element) so that the light reception sensitivity of the light receiving element 9 remains constant at every bottomdead point. As a result, the output signal of the combustion pressure sensor is automatically and periodically corrected through the learning procedure, as described in conjunction with Fig. 5.

The output characteristics of the combustion pressure sensor are illustrated in Fig. 7. The output characteristics are obtained by processing the changes in the light reception sensitivity of the light receiving element 9 through the signal processing circuit 10. In the figure, the standardized output characteristic accompanied with no detection error is indicated by a curve $\bar{y}$.

When the learning/correction according to the instant embodiment is not adopted, the output characteristic is such as indicated by a curve $\bar{x}$ assuming the light reception sensitivity is increased, while the characteristic curve $\bar{z}$ is obtained when the light reception sensitivity is reduced. It should be mentioned that by adopting the periodical learning/correcting procedure, the output characteristic always follows the standardized characteristic curve $\bar{y}$ even when the light reception sensitivity is significantly increased or decreased due to external factors other than the changes in the combustion pressure P.

Details of the signal processing circuit 10 of Fig. 1 are shown in Fig. 8. In response to detection of the bottom dead point, the bottom dead point sensor 11 produces an output signal and a switch 20 is closed to cause the light reception sensitivity of the light receiving element 9 to be held by a capacitor 21. The anode voltage of the light emitting element 8 is controlled through a comparator 23 so that the output voltage of a sample and hold circuit 30 constituted by the switch 20, the capacitor 21 and a buffer amplifier 22 is equal to a set voltage $V_s$. As a consequence, the light reception sensitivity at every bottom dead point becomes constant independent of the temperature change and/or other external disturbance. Further, the light reception sensitivity of the light receiving element 9 is transformed into an output voltage $E_o$ corresponding to the combustion pressure through a signal converter circuit 24, the output voltage $E_o$ being transmitted to the microcomputer 12. In particular, the pulse width of the pulse signal produced by the bottom dead point sensor 11 for opening and closing the switch 20 is selected to be less than several hundred microseconds ($\mu$s).

Next, another learning/correcting method will be described. This method resides in that the output signal of the combustion pressure sensor is inputted to a digital computer, e.g. microcomputer arranged to be arithmetically corrected. A learning/correcting system based on such a microcomputer is shown in Fig. 9. The light reception sensitivity (the sensitivity shown in Fig. 5) of the light receiving element 9 incorporated in the combustion pressure sensor is converted into a corresponding voltage value which is then transmitted to the microcomputer, wherein the voltage value corresponding to the light reception sensitivity illustrated in Fig. 5 is converted to a digital value through an A/D converter 13, the digital value being inputted to microprocessor unit (MPU) 15 through an input port 14.

In this case, the signal processing circuit 10 includes neither the sample and hold circuit 30 nor the comparator 23, wherein the voltage $V_s$ (Fig. 8) is applied to the light emitting element 8 as the anode voltage. The output signal is shifted in voltage level and amplified through the signal converter circuit 24 to be subsequently supplied to the input of the microcomputer 12. Figs. 10 and 11 show signal processing flow charts.

Upon every bottom dead point, the MPU 15 is interrupted by the output signal of the bottom dead point sensor 11 to execute the processing flow illustrated in Fig. 10. At a step 102, a pressure signal PD is fetched which represents the pressure within the engine cylinder at the bottom dead point of the piston. At a step 104, it is decided whether the pressure signal PD represents a measured value within a predetermined range, to thereby eliminate influence of noise such as ignition noise. At a step 106, the measured value PD is divided by a reference value PR, to give a quotient $\alpha$ which represents a correcting value. At a step 108, this value $\alpha$ is stored in RAM 17.

Measurement is normally executed in accordance with the flow chart shown in Fig. 11. The processing flow as illustrated is executed every time the crank reaches a predetermined angle or every time the volume of the combustion chamber changes by a predetermined amount. A system for detecting the combustion pressure upon every predetermined change in volume of the combustion chamber is disclosed in U.S. Patent No. 4,455,980. The output of the signal processing circuit 10 is detected as a pressure signal P at a step 112 and multiplied with the correcting factor $\alpha$ stored in the RAM 17 to arithmetically determine the true pressure PT.

In particular, the bottom dead point can be determined on the basis of an output signal from a crank angle sensor.

According to the embodiment disclosed above, there can be realized a combustion pressure sensor which resists the influence of temperature and in which the gap between the diaphragm and the optical fiber does not vary with temperature because the pressure detection portion is constituted by components which have substantially equal thermal coefficients of expansion. Further, since the thermal distortion of the pressure detecting portion due to the combustion temperature is insignificant, the pressure detecting portion will not be harmed or damaged under thermal stress. Thus, a combustion pressure sensor having high reliability is realized. Moreover, since the measurement is performed by using light, the detection accuracy will not be degraded even in the high voltage environment of the ignition plug.

Further, by virtue of the feature that the output signal of the combustion pressure sensor is periodically subjected to a learning/correction process with the aid of the combustion pressure at the bottom dead point, the pressure of combustion can be detected with high accuracy.

## Claims

1. A method of detecting combustion pressure in an internal combustion engine for generating an electrical signal in response to said pressure, including the steps of producing an electric signal based on said combustion pressure at a predetermined angle of rotation of said engine by using an optical sensing means (5, 6, 8, 9) including a light emitting means (8) and a light detecting means (9), obtaining a correcting value between the detected value and a predetermined reference value to derive a difference signal therebetween, and using said difference signal to execute correcting operations to bring said difference toward zero by controlling the output of at least one of said light detecting means and said light emitting means.

2. A method as claimed in claim 1 characterised in that the correcting value corresponding to the difference signal between said detected value and said reference value is arithmetically determined and stored to be utilized to bring said difference signal toward zero.

3. A method as claimed in claim 1 or 2 wherein said predetermined angle of rotation of said engine is bottom dead centre of said crank shaft.

4. A method as claimed in any preceding claim wherein the light sensing means further includes a diaphragm (3) located in the combustion chamber of said engine, optical fibers (2) extending from said diaphragm to said light emitting means (8) and said light detecting means (9), said diaphragm being deformable under the combustion pressure in said engine, said optical fibers introducing light from said light emitting means to a light reflecting surface of said diaphragm and introducing light from said reflecting surface to the light detecting means, the reflected light being dependent upon the relative position of said diaphragm to said light detecting means, comparing the output of the light detecting means produced at bottom dead centre of said crank shaft with said reference signal value and a correcting means arranged to vary the output of said light emitting means to bring said difference value toward zero.

5. A method as claimed in any preceding claim wherein the intensity of light output of the light emitting means (8) and/or the light detecting means (9) is/are controlled at said predetermined angle of rotation of said engine to be substantially constant.

6. A combustion chamber pressure detecting apparatus for generating an electrical signal in response to a combustion pressure in an internal combustion engine including means (11) for detecting a predetermined angle of rotation of said engine, means (8, 9, 30) for producing a detected electric signal based on said combustion pressure at said detected predetermined angle, means for producing a predetermined reference value, comparison means (23) for comparing the detected electric signal with said predetermined reference value to derive a difference therebetween, and correcting means for executing correcting operations to bring said difference toward zero characterised in that the detecting means is a light sensing means (5, 6, 8, 9) including a light emitting means (8) and a light detecting means (9) whereby said light sensing means outputs said electric signal to said comparison means (23) and upon detection of said predetermined angle the comparison means compares the detected electric signal with said reference value and a correcting signal is produced to control the output of at least one of said light detecting means (9) and said light emitting means (8).

**7.** A combustion chamber pressure detecting apparatus as claimed in claim 6, wherein arithmetic and storing means (13-17) are provided for producing a correcting value corresponding to the difference between said detected electric signal and said reference value and for utilisation to correct the detected electrical signal.

**8.** A combustion chamber pressure detecting apparatus as claimed in claim 7, wherein said arithmetic and storing means includes a microprocessor (15) and a storing means (16, 17).

**9.** A combustion chamber pressure detecting apparatus as claimed in claim 6 wherein the intensity of light output of the light emitting means (8) and/or the light detecting means (9) is/are controlled at said predetermined angle of rotation of said engine to be substantially constant.

**10.** A combustion chamber pressure detecting apparatus as claimed in claim 6 wherein both the light detecting means and light emitting means outputs are varied by said correcting signal.

**11.** A combustion pressure detecting apparatus as claimed in claim 6 wherein the light sensing means comprises the light emitting means (8), the light detecting means (9), a diaphragm (3) with a light reflecting surface which is deformable under the combustion pressure in the engine, optical fibers (2) for introducing light from said, light emitting means to said light reflecting surface and for introducing light reflected from said light reflecting surface to the light detecting means, and signal processing means (10) for detecting said combustion pressure from the output of said light detecting means, said signal processing means including said comparison means (23) and said correcting means.

**12.** A combustion chamber pressure detecting apparatus as claimed in any of claims 6 to 11 wherein the means for detecting a predetermined angle of rotation of said engine is a crankshaft angle detector (11) which is adapted to produce an output signal upon detection of bottom dead center of the crankshaft.

**Patentansprüche**

**1.** Verfahren zur Bestimmung des Verbrennungsdrucks einer Verbrennungskraftmaschine, um in Abhängigkeit von dem Druck ein elektrisches Signal zu erzeugen, umfassend die folgenden Schritte: Erzeugen eines elektrischen Signals auf der Basis des Verbrennungsdrucks bei einem vorbestimmten Drehwinkel des Motors mit Hilfe einer optischen Sensoreinrichtung (5, 6, 8, 9), die eine Lichtsendeeinrichtung (8) und eine Lichterfassungseinrichtung (9) aufweist, Ermitteln eines Korrekturwertes zwischen dem erfaßten Wert und einem vorbestimmten Bezugswert, um ein Differenzsignal zwischen diesen herzuleiten, und Verwendung des Differenzsignals zur Durchführung von Korrekturmaßnahmen, um die Differenz auf null zu bringen durch Steuern des Ausgangssignals von mindestens einer der Lichterfassungseinrichtung und der Lichtsendeeinrichtung.

**2.** Verfahren nach Anspruch 1, dadurch gekennzeichnet, daß der Korrekturwert entsprechend dem Differenzsignal zwischen dem erfaßten Wert und dem Bezugswert arithmetisch ermittelt wird und gespeichert wird, um damit das Differenzsignal auf null zu bringen.

**3.** Verfahren nach Anspruch 1 oder 2, dadurch gekennzeichnet, daß der vorbestimmte Drehwinkel des Motors der untere Totpunkt der Kurbelwelle ist.

**4.** Verfahren nach einem der vorhergehenden Ansprüche, dadurch gekennzeichnet, daß die optische Sensoreinrichtung ferner eine Membran (3) umfaßt, die in der Verbrennungskammer des Motors liegt, optische Fasern (2), die sich von der Membran zu der Lichtsendeeinrichtung (8) und der Lichterfassungseinrichtung (9) erstrecken, wobei die Membran unter dem Verbrennungsdruck des Motors verformbar ist, und die optischen Fasern leiten Licht von der Lichtsendeeinrichtung zu einer lichtreflektierenden Fläche der Membran, und sie leiten Licht von der reflektierenden Fläche zu der Lichterfassungseinrichtung, wobei das reflektierte Licht von der Lage der Membran in bezug auf die Lichterfassungseinrichtung abhängt, und das Ausgangssignal der Lichterfassungseinrichtung, das am unteren Totpunkt der Kurbelwelle erzeugt wurde, wird mit dem Bezugssignalwert verglichen, und eine Korrektureinrichtung ist vorgesehen, um das Ausgangssignal der Lichterzeugungseinrichtung dahingehend zu ändern, daß der Differenzwert auf null gebracht wird.

**5.** Verfahren nach einem der vorhergehenden Ansprüche, dadurch gekennzeichnet, daß die Intensität des Lichtausgangs der Lichterzeugungseinrichtung (8) und/oder der Lichterfassungseinrichtung (9) bei dem vorbestimmten Drehwinkel des Motors auf einen im wesentlichen konstanten Wert gesteuert wird/werden.

**6.** Vorrichtung zur Bestimmung des Drucks in der Verbrennungskammer zum Erzeugen eines elektrischen Signals in Abhängigkeit von einem Verbrennungsdruck in einer Verbrennungskraftmaschine, umfassend eine Einrichtung (11), die einen vorbestimmten Drehwinkel des Motors ermittelt, eine Einrichtung (8, 9, 30), die ein erfaßtes elektrisches Signal auf der Basis des Verbrennungsdrucks bei dem ermittelten vorbestimmten Winkel erzeugt, eine Einrichtung zum Erzeugen eines vorbestimmten Bezugswertes, eine Vergleichseinrichtung (23), die das erfaßte elektrische Signal mit dem vorbestimmten Bezugswert vergleicht, um eine Differenz dazwischen herzuleiten, und eine Korrektureinrichtung, die Korrekturmaßnahmen durchführt, um die Differenz auf null zu bringen, dadurch gekennzeichnet, daß die Erfassungseinrichtung eine optische Sensoreinrichtung (5, 6, 8, 9) ist mit einer Lichtsendeeinrichtung (8) und einer Lichterfassungseinrichtung (9), wodurch die optische Sensoreinrichtung das elektrische Signal der Vergleichseinrichtung (23) zuführt, und beim Erfassen des vorbestimmten Winkels vergleicht die Vergleichseinrichtung das erfaßte elektrische Signal mit dem Bezugswert, und ein Korrektursignal wird erzeugt, um den Ausgang von mindestens einer der Lichterfassungseinrichtung (9) und der Lichtsendeeinrichtung (8) zu steuern.

**7.** Vorrichtung zur Bestimmung des Drucks in der Verbrennungskammer nach Anspruch 6, dadurch gekennzeichnet, daß eine Rechen- und Speichereinrichtung (13-17) vorgesehen ist, die einen Korrekturwert entsprechend der Differenz zwischen dem erfaßten elektrischen Signal und dem Bezugswert erzeugt, und die zur Korrektur des erfaßten elektrischen Signals verwendet wird.

**8.** Vorrichtung zur Bestimmung des Drucks in der Verbrennungskammer nach Anspruch 7, dadurch gekennzeichnet, daß die Rechen- und Speichereinrichtung einen Mikroprozessor (15) und eine Speichereinrichtung (16, 17) umfaßt.

**9.** Vorrichtung zur Bestimmung des Drucks in der Verbrennungskammer nach Anspruch 6, dadurch gekennzeichnet, daß die Intensität des Lichtausgangs der Lichtsendeeinrichtung (8) und/oder der Lichterfassungseinrichtung (9) bei dem vorbestimmten Drehwinkel des Motors auf einen im wesentlichen konstanten Wert gesteuert wird/werden.

**10.** Vorrichtung zur Bestimmung des Drucks in der Verbrennungskammer nach Anspruch 6, dadurch gekennzeichnet, daß sowohl der Ausgang der Lichterfassungseinrichtung als auch der Ausgang der Lichtsendeeinrichtung durch das Korrektursignal verändert wird.

**11.** Vorrichtung zur Bestimmung des Verbrennungsdrucks nach Anspruch 6, dadurch gekennzeichnet, daß die optische Sensoreinrichtung die Lichtsendeeinrichtung (8) umfaßt, die Lichterfassungseinrichtung (9), eine Membran (3) mit einer lichtreflektierenden Fläche, die unter dem Verbrennungsdruck des Motors verformbar ist, optische Fasern (2), die Licht von der Lichtsendeeinrichtung zu der lichtreflektierenden Fläche leiten, und die das von der lichtreflektierenden Fläche reflektierte Licht zu der Lichterfassungseinrichtung leiten, und eine Signalverarbeitungseinrichtung (10), die den Verbrennungsdruck anhand des Ausgangssignals der Lichterfassungseinrichtung ermittelt, wobei die Signalverarbeitungseinrichtung die Vergleichseinrichtung (23) und die Korrektureinrichtung umfaßt.

**12.** Vorrichtung zur Bestimmung des Drucks in der Verbrennungskammer nach einem der Ansprüche 6 bis 11, dadurch gekennzeichnet, daß die Einrichtung zum Bestimmen des vorbestimmten Drehwinkels des Motors ein Kurbelwellenwinkeldetektor (11) ist, der in der Lage ist, ein Ausgangssignal zu erzeugen, wenn der untere Totpunkt der Kurbelwelle erfaßt wird.

## Revendications

**1.** Procédé destiné à détecter la pression de combustion régnant dans un moteur à combustion interne, pour engendrer un signal électrique en réponse à ladite pression, comprenant les phases consistant à : produire un signal électrique basé sur ladite pression de combustion à un angle prédéterminé de rotation dudit moteur en utilisant un moyen capteur optique (5, 6, 8, 9) qui comprend un moyen (8) émetteur de lumière et un moyen (9) détecteur de lumière, obtenir une valeur corrective entre la valeur détectée et une valeur de référence prédéterminée pour former un signal de différence entre ces valeurs, et utiliser ledit signal de différence pour exécuter des opérations de correction de manière à rapprocher ladite différence de zéro en commandant la sortie d'au moins un desdits moyens constitués par le moyen détecteur de lumière et le moyen émetteur de lumière.

**2.** Procédé selon la revendication 1, caractérisé en ce que la valeur corrective correspondant au signal de différence entre ladite valeur détectée et ladite valeur de référence est formée arithmétiquement et mémorisée afin d'être utilisée pour rapprocher ledit signal de différence de zéro.

**3.** Procédé selon la revendication 1 ou 2, dans lequel ledit angle de rotation prédéterminé dudit moteur est le point mort bas dudit vilebrequin.

**4.** Procédé selon une quelconque des revendications précédentes, dans lequel le moyen capteur de lumière comprend en outre un diaphragme (3) placé dans la chambre de combustion dudit moteur, des fibres optiques (2) qui s'étendent dudit diaphragme audit moyen émetteur de lumière (8) et audit moyen détecteur de lumière (9), ledit diaphragme pouvant se déformer sous l'effet de la pression de combustion régnant dans ledit moteur, lesdites fibres optiques introduisant la lumière dudit moyen émetteur de lumière à une surface réfléchissante dudit diaphragme et transmette la lumière de ladite surface réfléchissante au moyen détecteur de lumière, la lumière réfléchie étant fonction de la position relative dudit diaphragme par rapport audit moyen détecteur de lumière, comparer la sortie du moyen détecteur de lumière produite au point mort bas dudit vilebrequin à ladite valeur de signal de référence, et des moyens de correction agencés pour modifier la sortie dudit moyen émetteur de lumière pour rapprocher ladite valeur de différence de zéro.

**5.** Procédé selon une quelconque des revendications précédentes, dans lequel l'intensité de la sortie de lumière du moyen (8) émetteur de lumière et/ou celle du moyen (9) détecteur de lumière est ou sont réglée(s) audit angle prédéterminé de rotation du moteur de manière à être sensiblement constante(s).

**6.** Appareil destiné à détecter la pression de d'une chambre de combustion pour engendrer un signal électrique en réponse à la pression de combustion régnant dans un moteur à combustion interne comprenant un moyen (11) servant à détecter un angle prédéterminé de rotation dudit moteur, un moyen (8, 9, 30) servant à produire un signal électrique détecté basé sur ladite pression de combustion audit angle prédéterminé détecté, un moyen servant à produire une valeur de référence prédéterminée, un moyen de comparaison (23) destiné à comparer le signal électrique détecté à ladite valeur de référence prédéterminée pour former la différence entre ces grandeurs, et un moyen de correction destiné à exécuter des opérations de correction servant à rapprocher ladite différence de zéro, caractérisé en ce que le moyen détecteur est un moyen (5, 6, 8, 9) sensible à la lumière, qui comprend un moyen (8) émetteur de lumière et un moyen (9) détecteur de lumière, de sorte que ledit moyen sensible à la lumière transmet en sortie ledit signal électrique audit moyen de comparaison (23) et, en réponse à la détection dudit angle prédéterminé, le moyen de comparaison compare le signal électrique détecté à ladite valeur de référence, et un signal de correction est produit pour commander la sortie d'au moins un des deux moyens, le moyen (9) détecteur de lumière et le moyen (8) émetteur de lumière.

**7.** Appareil destiné à détecter la pression d'une chambre de combustion selon la revendication 6, dans lequel des moyens arithmétiques et de mémoire (13 à 17) sont prévus pour produire une valeur de correction correspondant à la différence entre ledit signal électrique détecté et ladite valeur de référence, et à utiliser cette valeur pour corriger le signal électrique détecté.

**8.** Appareil destiné à détecter la pression d'une chambre de combustion selon la revendication 7, dans lequel ledit moyen arithmétique et de mémorisation comprend un microprocesseur (15) et un moyen de mémorisation (16, 17).

**9.** Appareil destiné à détecter la pression d'une chambre de combustion selon la revendication 6, dans lequel l'intensité de la sortie de lumière du moyen (8) émetteur de lumière et/ou celle du moyen (9) détecteur de lumière est ou sont réglée(s) audit angle prédéterminé de rotation dudit moteur de manière à être sensiblement constantes.

**10.** Appareil destiné à détecter la pression d'une chambre de combustion selon la revendication 6, dans lequel les sorties du moyen détecteur de lumière et du moyen émetteur de lumière sont modifiées par ledit signal de correction.

**11.** Appareil destiné à détecter une pression de combustion selon la revendication 6, dans lequel le moyen sensible à la lumière comprend le moyen (8) émetteur de lumière, le moyen (9) détecteur de lumière, un diaphragme (3) muni d'une surface réfléchissante qui peut se déformer sous l'effet de la pression de combustion régnant dans le moteur, des fibres optiques (2) destinées à transmettre la lumière dudit moyen émetteur de lumière à ladite surface réfléchissante et à transmettre la lumière réfléchie par ladite surface réfléchissant la lumière au moyen détecteur de lumière, et un moyen (10) de traitement des signaux destiné à détecter ladite pression de combustion à partir de la sortie dudit moyen détecteur de lumière, ledit moyen de traitement des signaux comprenant ledit moyen de comparaison (23) et ledit moyen de correction.

**12.** Appareil destiné à détecter la pression d'une chambre de combustion selon une quelconque des revendications 6 à 11, dans lequel le moyen destiné à détecter un angle prédéterminé de rotation dudit moteur est un détecteur (11) d'angle du vilebrequin qui est adapté pour produire un signal de sortie en réponse à la détection du point mort bas du vilebrequin.

FIG. 1

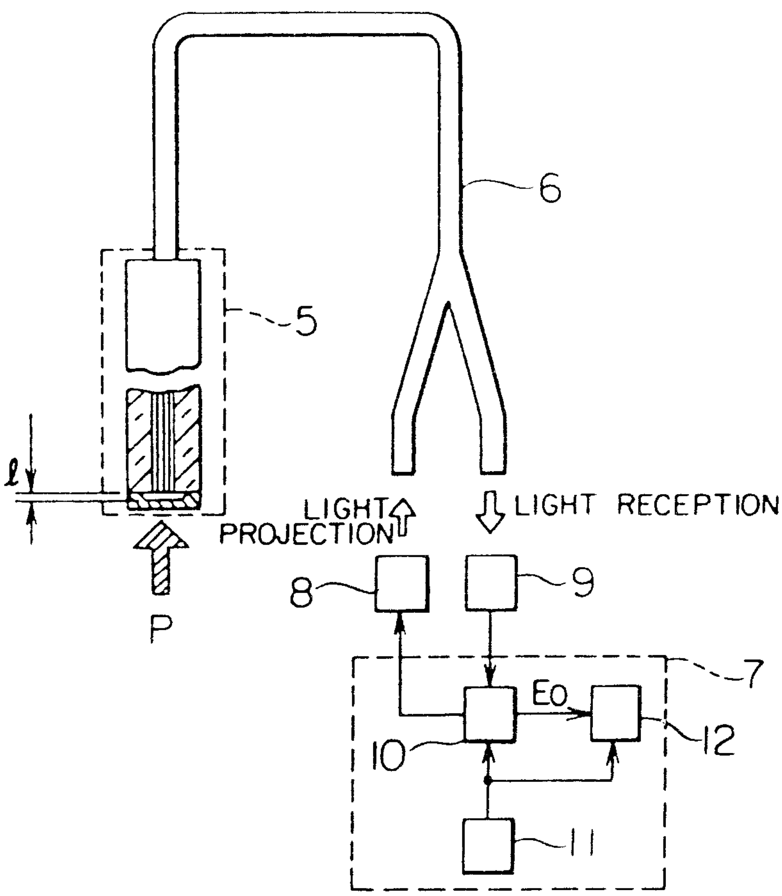


FIG. 2

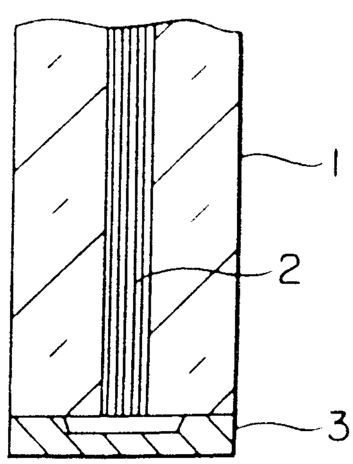


FIG. 3

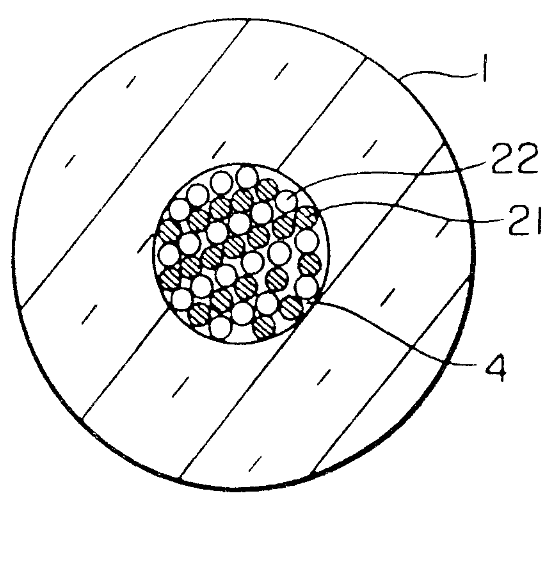

FIG. 4

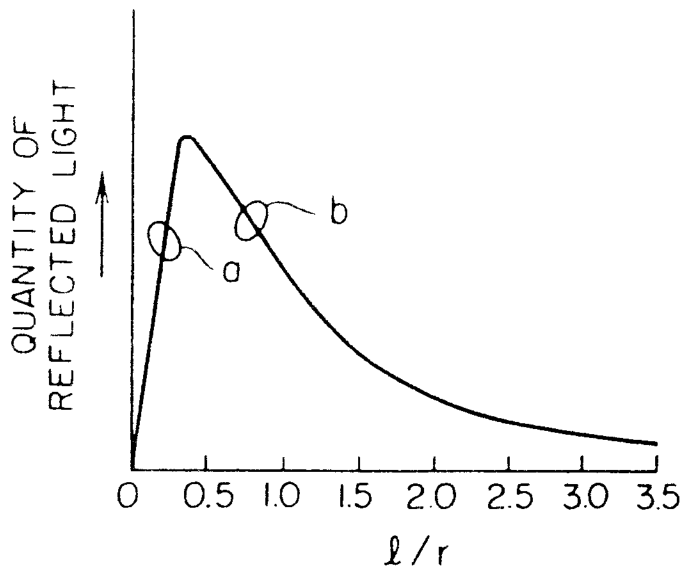
QUANTITY OF
REFLECTED LIGHT
a
b
0
0.5
1.0
1.5
2.0
2.5
3.0
3.5
ℓ / r

FIG. 5

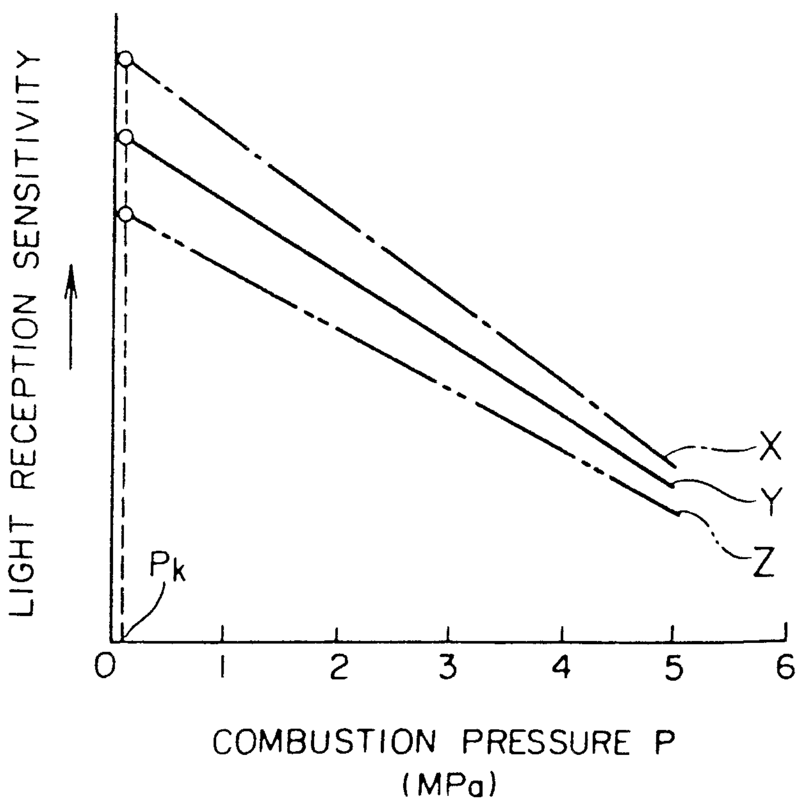
LIGHT RECEPTION SENSITIVITY
X
Y
Z
Pk
0
1
2
3
4
5
6
COMBUSTION PRESSURE P
(MPa)

FIG. 6

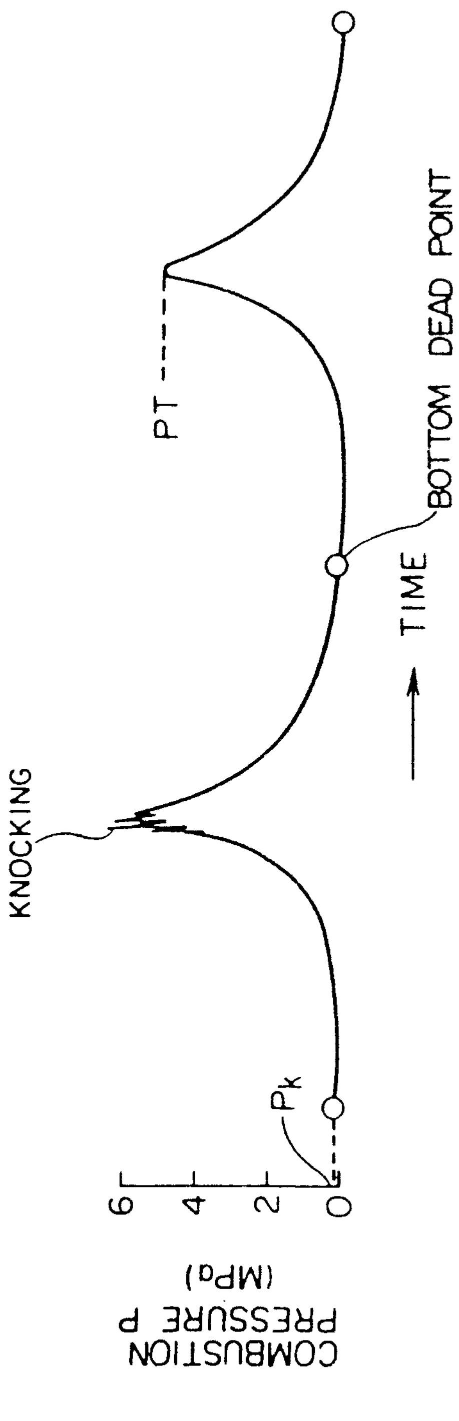
KNOCKING
PT
BOTTOM DEAD POINT
TIME
COMBUSTION PRESSURE P (MPa)
6
4
2
0
Pk

FIG. 7

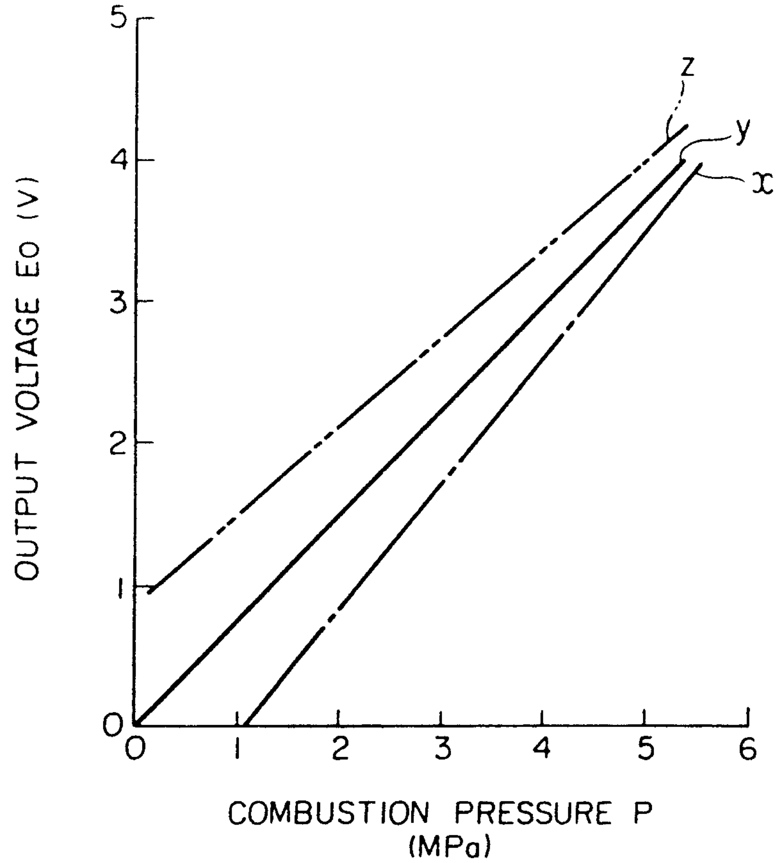
OUTPUT VOLTAGE Eo (V)
5
4
3
2
1
0
0
1
2
3
4
5
6
z
y
x
COMBUSTION PRESSURE P
(MPa)

FIG. 8

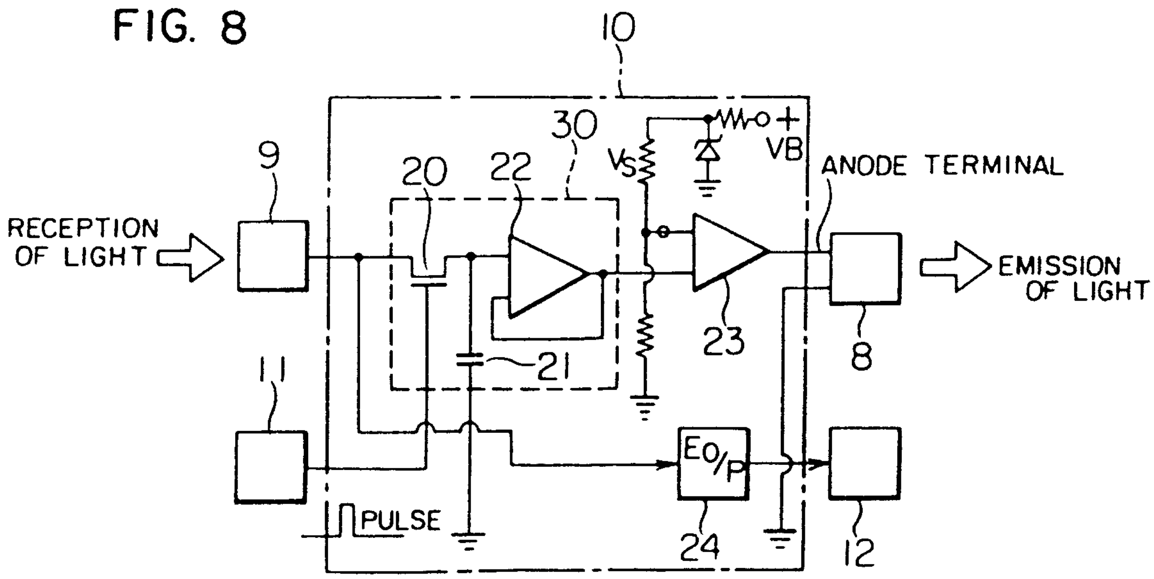
10
30
9
20
22
Vs
VB
ANODE TERMINAL
RECEPTION
OF LIGHT
EMISSION
OF LIGHT
23
8
21
11
Eo/P
PULSE
24
12

FIG. 9

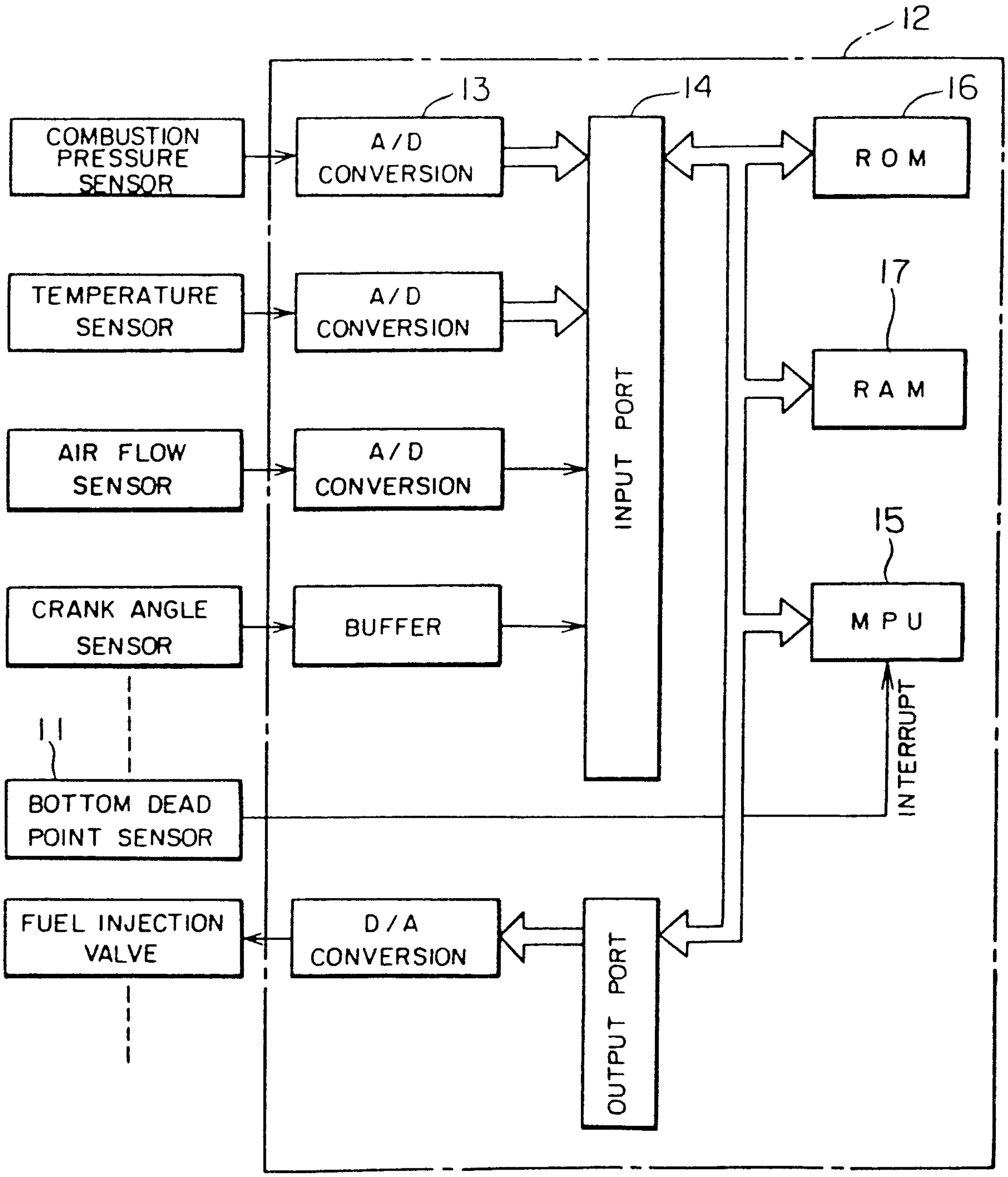
12
13
14
16
COMBUSTION PRESSURE SENSOR
A/D CONVERSION
ROM
17
TEMPERATURE SENSOR
A/D CONVERSION
RAM
AIR FLOW SENSOR
A/D CONVERSION
INPUT PORT
15
CRANK ANGLE SENSOR
BUFFER
MPU
11
INTERRUPT
BOTTOM DEAD POINT SENSOR
FUEL INJECTION VALVE
D/A CONVERSION
OUTPUT PORT

FIG. 10

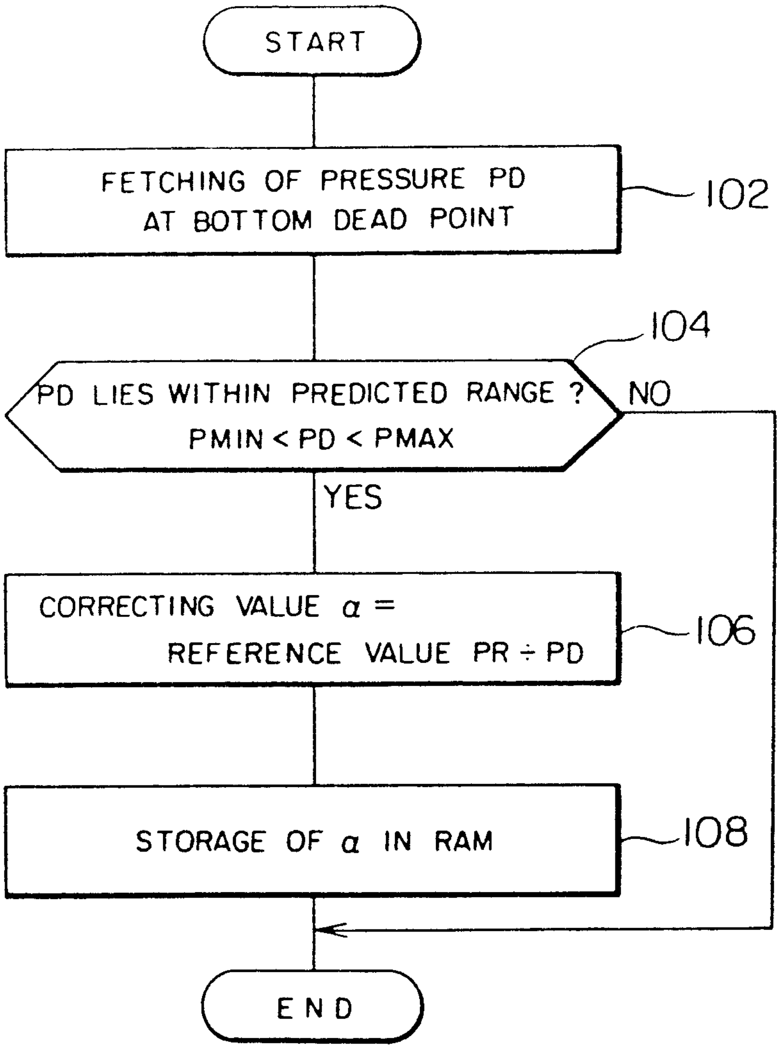
START
FETCHING OF PRESSURE PD AT BOTTOM DEAD POINT
102
104
PD LIES WITHIN PREDICTED RANGE ?
PMIN < PD < PMAX
NO
YES
CORRECTING VALUE α =
REFERENCE VALUE PR ÷ PD
106
STORAGE OF α IN RAM
108
END

FIG. 11

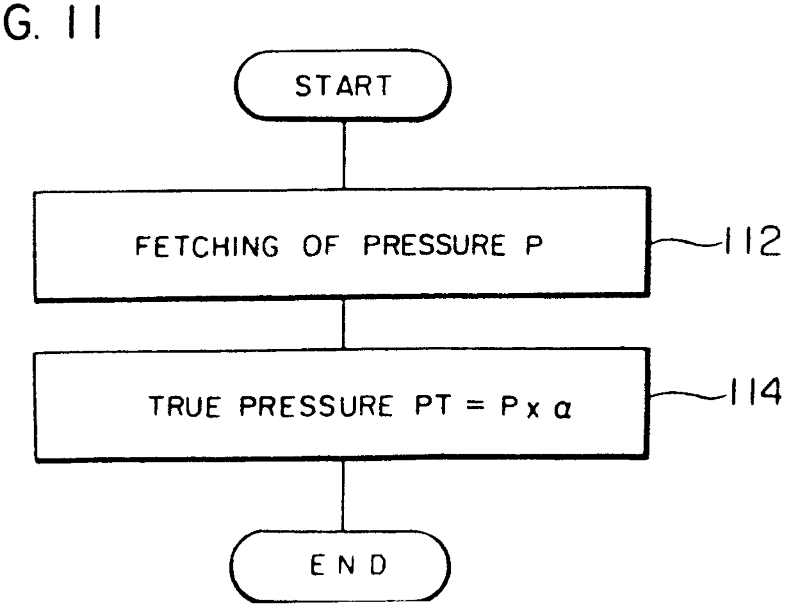
START
FETCHING OF PRESSURE P
112
TRUE PRESSURE PT = P x α
114
END